# EUROPÄISCHE PATENTSCHRIFT

(11) **EP 3 401 048 B1**
(45) Veröffentlichungstag und Bekanntmachung des Hinweises auf die Patenterteilung: **16.11.2022**
(21) Anmeldenummer: 18169146.0
(22) Anmeldetag: 25.04.2018
(51) Int. Cl.: B23D 61/02, A01D 34/73

(54) **SÄGEBLATT FÜR EINE SÄGE ZUM SCHNEIDEN VON STÄNGELIGEM HALMGUT**
SAW BLADE FOR A SAW FOR CUTTING STEMULAR STALKS
LAME DE SCIE POUR UNE SCIE DESTINÉE À LA DÉCOUPE DES CÉRÉALES À TIGE

(30) Priorität: 09.05.2017 AT 503762017
(43) Veröffentlichungstag der Anmeldung: 14.11.2018
(73) Patentinhaber: Gebrüder Busatis Gesellschaft m.b.H., 3251 Purgstall an der Erlauf (AT)
(72) Erfinder: Lutz, Wolfgang, 3250 Wieselburg (AT); Riegler, Thomas, 3340 Waidhofen an der Ybbs (AT)
(74) Vertreter: Puchberger & Partner Patentanwälte

(56) Entgegenhaltungen:
- EP-A1- 2 674 237
- DE-U1- 20 020 731
- JP-U- S5 476 238
- JP-U- S54 180 130
- JP-U- S57 117 940
- US-A- 5 906 053

## Beschreibung

Die Erfindung betrifft ein Sägeblatt für einen Rotormäher zum Schneiden von stängeligem Halmgut, wie beispielsweise Mais oder Hirse, wobei das Sägeblatt eine Planflanke und eine Facettenflanke und eine Sägekante mit einer Aufeinanderfolge von Sägezähnen aufweist und die Sägezähne mit einer Verschleißschutzzone, deren Verschleißwiderstand größer ist als der des Materials des Grundkörpers des Sägeblatts, versehen sind.

Das erfindungsgemäße Sägeblatt ist bevorzugt für den Einsatz als Schneidelement für Mähvorsätze zum Mähen von stängeligem Halmgut, wie beispielsweise Mais oder Hirse, bestimmt. Bevorzugt sind dies reihenunabhängige Mähvorsätze. Diese Mähvorsätze sind in Frontstellung mit nebeneinanderliegenden Mährotoren und Einzugstrommeln versehen, wobei jeder Mährotor als Säge und die Einzugstrommeln zum Weitertransport des geschnittenen Schnittgutes dienen. Die Mährotoren umfassen je eine Trägerscheibe, die von einer Antriebswelle in Rotation versetzt wird. Peripher sind an der Trägerscheibe die erfindungsgemäßen Sägeblätter angeordnet, an deren Außenrand die Sägezähne angeordnet sind. Die Einheit der nebeneinanderliegenden Mährotoren wird knapp über dem Boden geführt und schneidet das Halmgut möglichst knapp über dem Boden ab, und zugehörige Einzugstrommeln befördern das Halmgut weiter in die Erntemaschine zu einem Häcksler.

Der Mährotor umfasst üblicherweise drei bis zehn segmentförmige Sägeblätter, die bei Verschleiß austauschbar sind. Beim Sägen und Ernten werden bei den heutigen leistungskräftigen Erntemaschinen enorme Materialmengen geschnitten, wodurch auch ein erhöhter Verschleiß an den Sägeblättern auftritt. Somit ist es ein Ziel der vorliegenden Erfindung, die Sägeblätter so auszugestalten, dass der Verschleiß möglichst gering ist.

Da die Mährotoren mit großer Geschwindigkeit gedreht werden und knapp über dem Boden geführt werden, ist es ein weiteres Ziel der Erfindung, die Lage der Mährotoren stabil zu halten, damit sie nicht vom Boden weggebogen werden. Weiters sollen die Sägezähne selbstschärfend sein und die Zähne selbst einen möglichst hohen Verschleißwiderstand aufweisen.

Im Stand der Technik ist es z.B. aus der DE 19825758 B4 bekannt geworden, den gesamten Bereich der Zähne bis zum Montageabschnitt des Sägeblatts verschleißbeständig zu machen, indem eine Hartmetallschicht aufgebracht wird. Für das Schneiden von stängeligem Halmgut ist auch beschrieben, die Hartmetallbeschichtung nur an einer Fläche des Sägeblatts anzuordnen, um einen Selbstschärfeeffekt zu gewährleisten. Die dort geoffenbarten Sägezähne sind anfänglich stumpf ausgebildet und erst nach längerem Mähvorgang bilden sich selbstschärfend spitze Schneidkanten aus. Ein gattungsgemässes Sägeblatt ist aus der JPS54180130U bekannt.

Bei rotierenden Sägeblättern ist es auch bekannt geworden, an der Peripherie von Sägeblättern Facetten vorzusehen, um spitz zulaufende Schneidkanten an der Zahnbrust vorzusehen. Bei bekannten derartigen Zahnausbildungen wurde zur Erhöhung der Standfestigkeit eine Hartmetallbeschichtung auf die Facetten aufgetragen, was jedoch den Nachteil hat, dass bei Verschleiß dieser Schicht Schärfe und Schnittfähigkeit verlorengeht. Bei Kontakt mit festen Gegenständen wie Steinen, kommt es zu einem Absplittern der Hartmetallbeschichtung, wodurch lediglich das weichere Material des Grundkörpers des Sägeblatts übrig bleibt. Auch dieser Nachteil soll gemäß Erfindung vermieden werden.

Weiters tritt beim Stand der Technik das Problem auf, dass die jeweils benachbarten Mährotoren gegenläufig gedreht werden. Somit müssen zwei Ausführungen der Sägeblätter hergestellt und eingesetzt werden, nämlich eine linke und eine rechte Ausführung. Dies erhöht die Kosten und sollte vermieden werden.

Die vorliegende Erfindung ist in erster Linie dadurch gekennzeichnet, dass die Verschleißschutzzone auf jeweils der Planflanke jedes Sägezahns angebracht ist, dass die Sägezähne im Bereich der Zahnbrust ausgehend von der Facettenflanke eine Schneidfacette aufweisen, dass die Schneidfacette mit einem Abstand zur Planflanke des Sägezahns ausgebildet ist und zu einer stumpfen Zahnschneide ausgebildet ist, und dass bevorzugt die Schneidfacette und die Facettenflanke ohne Verschleißschutzzone ausgebildet sind.

Erfindungsgemäss ist die Verschleißschutzzone auf der Planflanke des Sägezahns vom Zahndach bis zum oder nahe zum Zahngrund reichend angeordnet. In vorteilhafter Weise ist die Verschleißschutzzone mittels Hochenergiestrahlverfahren hergestellt.

In einer Ausführungsvariante sind die aufeinanderfolgenden Sägezähne mit ihrer Planflanke und der gegenüberliegenden Facettenflanke abwechselnd auf der unteren und der oberen Seite des Sägeblatts angeordnet.

Die Zahndächer der Sägezähne können tangential zur Sägelinie des Sägeblatts liegen. Die Zahndächer der Sägezähne können zur Sägelinie einen Freiwinkel 0 bis 50° aufweisen.

In einer weiteren Variante kann der Freiwinkel 0° und der Schnittwinkel 90° betragen. Die Zahndächer der aufeinanderfolgenden Sägezähne der Sägekante können jeweils in schrägem Winkel zur Längsmittelebene des Sägeblatts angeordnet sein.

Die Erfindung nachstehend anhand der Zeichnungen beispielhaft beschrieben.
Fig. 1 zeigt die Frontansicht einer Mähmaschine, bei der unter anderem die gegenständliche Erfindung eingesetzt werden kann.
Fig. 2 ist eine Aufsicht auf den Mährotor mit einem Sägeblatt.
Fig. 3 ist eine schematische Schrägansicht einer Ausführungsform des erfindungsgemäßen Sägeblattes mit zwei vergrößerten Detailansichten.
Die Fig. 4 ist eine abgebrochene Ansicht einer Ausführungsform des Sägeblatts, und
Fig. 5 eine Aufsicht auf die Sägekante in abgebrochenem Zustand.
Die Figuren 6 und 7 zeigen Ansichten weiterer Ausführungsformen des Sägeblatts.

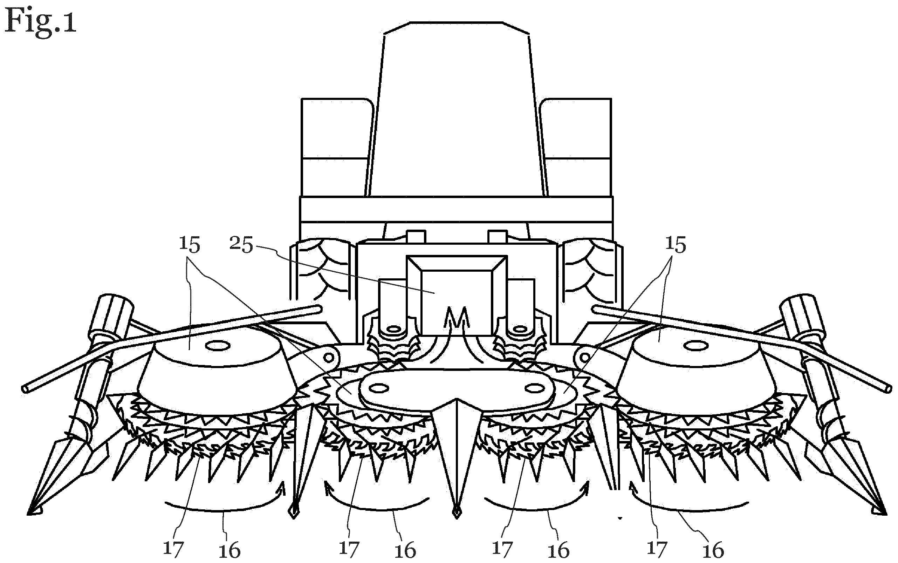

Fig. 1 zeigt die bekannte Anordnung einer Mähmaschine, die zum Mähen und bevorzugt auch zum Häckseln von stängelartigem Erntegut dient. Das nicht dargestellte Mähgut wird von den Mährotoren 17, die um im Wesentlichen vertikale Achsen rotieren, knapp über dem Boden erfasst, abgeschnitten und über die Einzugstrommeln 15 in den Einzugsschacht 25 zum Häcksler oder der weiteren Verarbeitung zugeführt. Die Einzugstrommeln 15 und Mährotoren 17 liegen üblicherweise paarweise nebeneinander und jeweils ein Paar weist entgegengesetzte Drehrichtung 16 auf. Die Einzugstrommeln 15 sind an der dem Boden zugewandten Fläche mit dem Mährotor 17 versehen, der an seiner Peripherie mit dem erfindungsgemäßen Sägeblatt 1 versehen ist. Verschiedene Bauweisen und Funktionsweisen derartiger Mähmaschinen sind in der Literatur ausführlich beschrieben, wie beispielsweise in der DE 195 31 918 B4.

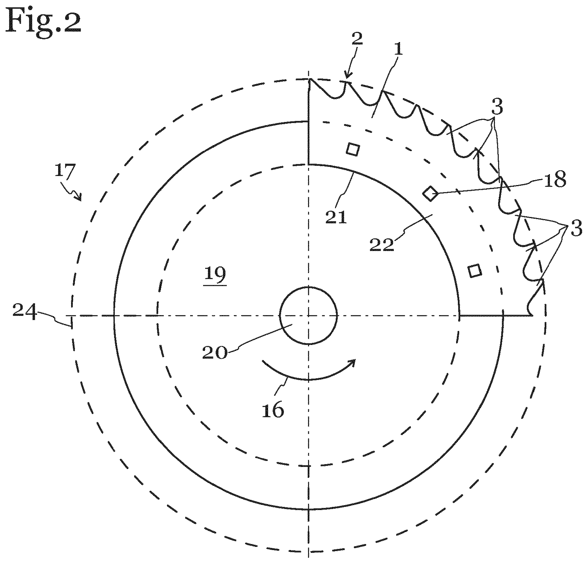

Die Fig. 2 zeigt die Aufsicht auf den Mährotor 17, der mit einem Sägeblatt 1 ausgestattet ist. Der fertige Mährotor 17 weist beispielsweise vier derartige Sägeblätter 1 auf, sodass die gesamte Peripherie des Mährotors 17 mit Sägeblättern 1 ausgefüllt ist.

Die Sägeblätter 1 sind über Befestigungsausnehmungen 18 mittels Schrauben auf der Trägerscheibe 19 angeordnet, die mittels zentraler Antriebswelle 20 in Drehrichtung 16 gedreht werden kann. Die Sägekante 2 umgibt die äußere Kante des Sägeblatts 1 und wird durch die Spitzen der Sägezähne 3 gebildet. Sie ergibt auch die Sägelinie 24 im Schnittgut. Vom Sägeblattrücken 21 erstreckt sich der Montageabschnitt 22 des Sägeblatts 1, der auf der Trägerscheibe 19 aufliegt.

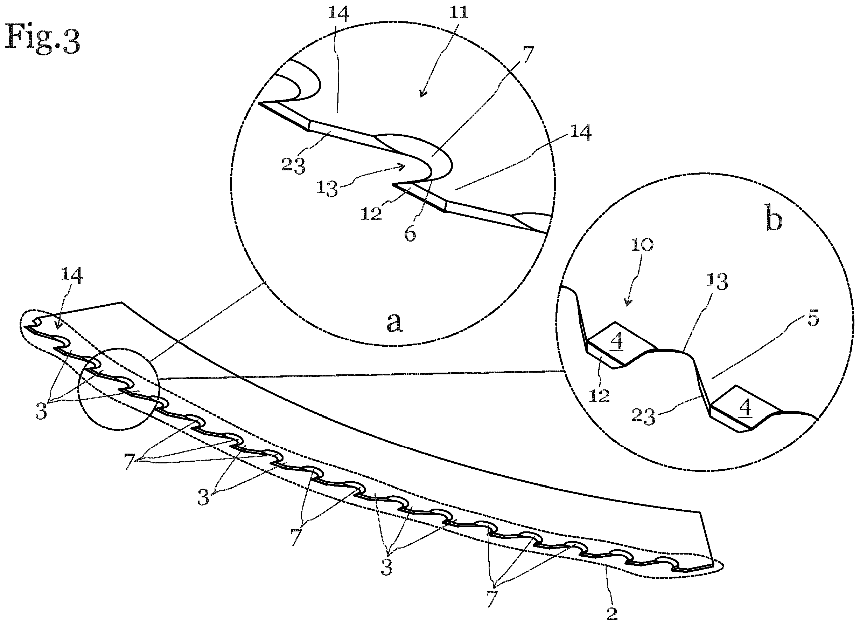

Fig. 3 zeigt eine Ausführungsform des Sägeblatts 1 in Schrägansicht und in Vergrößerung.

Bei dieser Ausführungsform sind alle Sägezähne 3 an einer oberen Seite 11 des Sägeblatts 1, die nachstehend Facettenflanke 14 genannt wird, mit den Schneidfacetten 7 versehen.

In der vergrößerten Darstellung der Fig. 3a ist zu sehen, dass sich die Schneidfacette 7 vom Zahngrund 13 über die Zahnbrust 6 nach oben bis zum Zahndach 12 erstreckt.

Die vergrößerte Darstellung der Fig. 3b zeigt die andere untere Seite 10 des Sägeblatts 1, die plan ausgeführt ist, und als Planflanke 5 bezeichnet wird. An der Planflanke 5 ist an jedem Sägezahn 3 die Verschleißschutzzone 4 angebracht. Die Verschleißschutzzone 4 erstreckt sich an einer Seite bis zur Kante, die durch die Schneidfacette 7 auf der anderen Seite des Sägeblatts 1 gebildet ist. Die Verschleißschutzzone 4 erstreckt sich von der Schneidfacette 7 entlang des Zahnrückens 12 in Richtung des Zahnrückens 23. Bei dieser Anordnung ist voll gewährleistet, dass über die gesamte Lebensdauer des Sägeblatts 1 der Verschleißwiderstand des Zahnes und der Selbstschärfeeffekt beibehalten wird. Dies bedeutet eine Einsparung überflüssiger Hartmetallbeschichtung, wie dies sonst aus dem Stand der Technik bekannt ist.

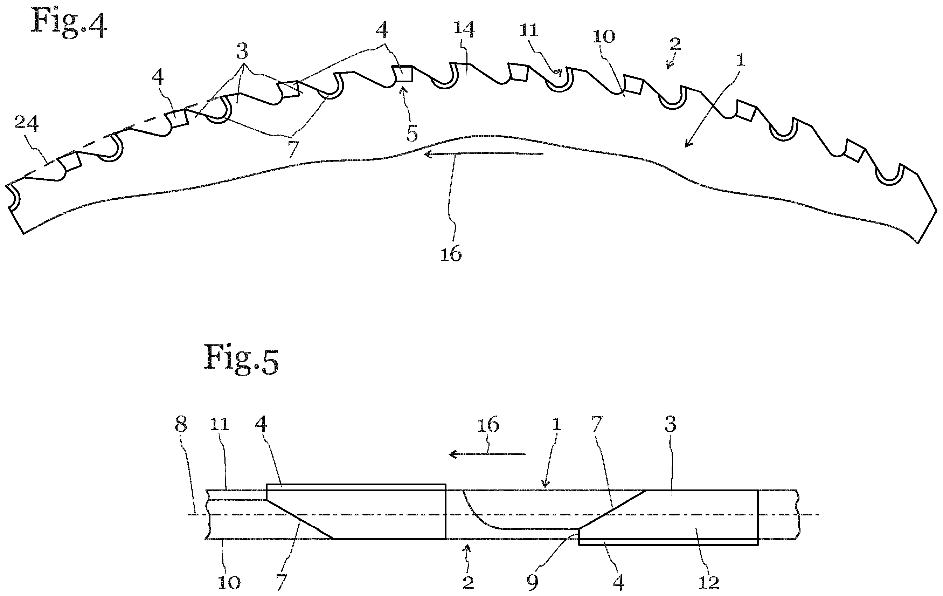

Die Fig. 4 zeigt eine weitere Ausführungsform des Sägeblatts 1. Anders als bei der vorherigen Ausführungsform gemäß Fig. 3, sind bei dieser Ausführung gemäß Fig. 4 die aufeinanderfolgenden Sägezähne 3 jeweils unterschiedlich ausgestaltet, sodass also ein Sägezahn 3 auf der dargestellten oberen Seite 11 des Sägeblatts 1 die Verschleißschutzzone 4 aufweist, während der nachfolgende Sägezahn 3 auf der oberen Seite 11 mit der Schneidfacette 7 ausgestattet ist und die zugehörige Verschleißschutzzone 4 auf der anderen, nicht dargestellten, unteren Seite 10 des Sägeblatts 1 angeordnet ist. Gleicher Weise folgt der Planflanke 5 jeweils die Facettenflanke 14, die einander abwechselnd jeweils auf der unteren Seite 10 und oberen Seite 11 des Sägeblatts 1 liegen.

Der Vorteil dieser wechselnden Anordnung von Planflanke und Facettenflanke liegt in der Symmetrie des Sägeblatts, wodurch alle Mährotoren mit den gleichen Sägeblättern ausgestattet werden können. Wie der Fig. 1 zu entnehmen ist, werden die Mährotoren 17 jedes Paares in einander entgegengesetzter Drehrichtung bewegt. Aus diesem Grund gibt es "linke" und davon verschiedene "rechte" Rotoren und Sägeblätter. Mit der vorliegenden Ausgestaltung gemäß Fig. 4 genügt eine einzige Ausführungsform, sodass die Herstellung vereinfacht und die Lagerhaltung ebenfalls vereinfacht und verbilligt wird. Weiters sind Fehlmontagen verhindert.

Die Fig. 5 zeigt die schematische Aufsicht auf die Sägekante 2 des Sägeblatts 1 gemäß Fig. 4. Das Sägeblatt 1 umfasst im Wesentlichen den plattenförmigen Grundkörper, aus dessen Peripherie die Schneidzähne 3 herausgearbeitet werden. Die Schneidfacetten 7 sind bei dieser Ausführung an den verschiedenen Seiten abwechselnd ausgebildet und münden am Zahndach 12 in eine Zahnschneide 9. Dies bedeutet, dass die Schneidfacetten 7 nicht über die gesamte Dicke des Sägeblatts 1 ausgeführt sind, sondern es bleibt ein stumpfer Teil als Zahnschneide 9 übrig. Diese Zahnschneide 9 mit ihrer stumpfen Ausbildung ist für den Schnitt des Schneidgutes bei der gegebenen Schnittgeschwindigkeit völlig ausreichend und bietet Abriebmaterial, wodurch die Standzeit des Sägeblatts 1 verlängert wird. Erst wenn die Zahnschneide 9 aus dem Material des Sägeblatts 1 abgenutzt ist, tritt der Selbstschärfeeffekt durch die auf den verschiedenen Seiten angeordneten Verschleißschutzzonen 4 in Kraft.

In Fig. 5 ist die Lage der Längsmittelebene 8 des Sägeblatts 1 eingezeichnet. Die Zahnschneide 9 kann auch bis zur Längsmittelebene 8 und darüber hinaus reichen.

Bei der Ausführungsvariante gemäß Fig. 4 ist die Sägelinie 24 durch die Gemeinsamkeit der Spitzen der Zahndächer 12 gebildet. Die Zahndächer 12 weisen einen Freiwinkel > 1 bis 50° auf.

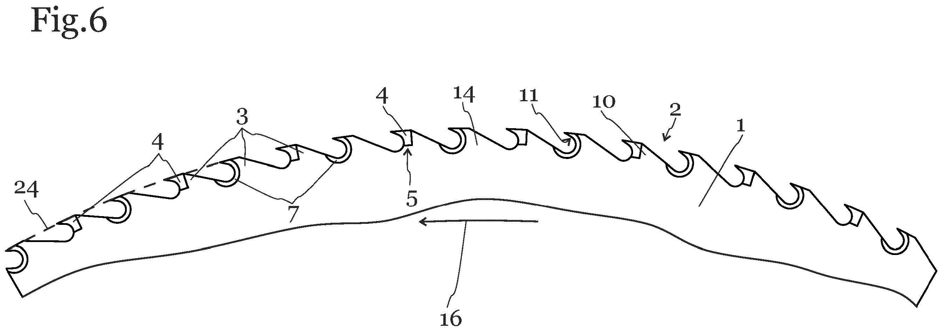

Die Ausführung nach Fig. 6 ist im Wesentlichen gleich aufgebaut wie die Ausführung gemäß Fig. 4. Auch hier sind die aufeinanderfolgenden Sägezähne 3 mit ihrer Planflanke 5 und der gegenüberliegenden Facettenflanke 14 abwechselnd auf der unteren Seite 10 und der oberen Seite 11, also auf den Planflanken 5 und Facettenflanken 14 angeordnet. Im Unterschied zur Ausführung gemäß Fig. 4 ist bei der Ausführung gemäß Fig. 6 jedes Zahndach 12 mit der Sägelinie 24 verlaufend und die Zähne bzw. deren Zahnschneiden 9 sind in Drehrichtung 16 stärker vorgezogen.

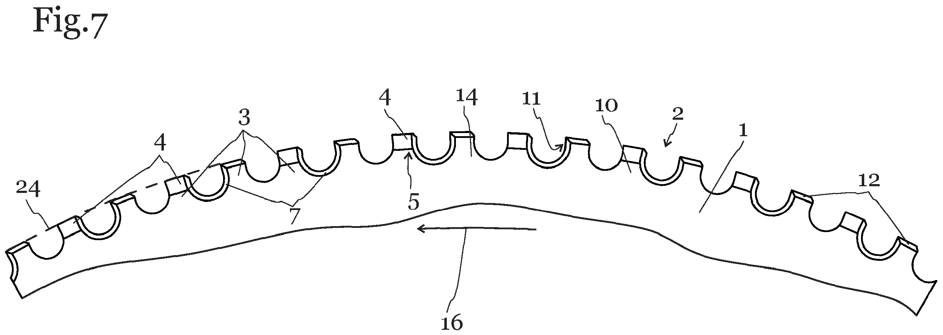

Die Ausführungsvariante nach Fig. 7 unterscheidet sich von den vorherigen Ausführungsformen dadurch, dass bei jedem Sägezahn der Freiwinkel 0° und der Schnittwinkel 90° beträgt. Auch hier liegen die Schneidfacette 7 und die Verschleißschutzzone 4 jeweils auf den anderen Seiten abwechselnd. Die Zahndächer 12 der aufeinanderfolgenden Sägezähne 3 der Sägekante 2 sind in schrägem Winkel zur Längsmittelebene 8 des Sägeblatts 1 angeordnet, wodurch entlang der Kante die Wirkung einer Verschränkung gegeben ist.

Die zur Erhöhung des Verschleißwiderstandes bevorzugten Hochenergiestrahlverfahren zeichnen sich durch eine hohe Energiedichte aus, sodass bei der Herstellung der Verschleißschutzzone eine kurze Einwirkzeit des Hochenergiestrahls genügt und das Material des Grundkörpers nur an der Oberfläche bzw. in sehr oberflächennahen Bereichen bis etwa 1 mm beeinflusst wird. Insbesondere kommt es durch das Hochenergiestrahlverfahren bei einem vorgehärteten Material des Grundkörpers im Bereich der Wärmeeinflusszone nur zu einem geringen Härteabfall. Ist das Material des Grundkörpers nicht gehärtet, kommt es durch die geringe Eindringtiefe zur raschen Abkühlung und damit zu einer Aufhärtung des Materials des Grundkörpers und damit zu einer Stützwirkung für die Verschleißschutzzone. Hochenergiestrahlverfahren sind in der Literatur ausreichend beschrieben. Beispielsweise sei auf DE 10 2007 059 865 A1, DE 196 49 865 C1 und EP 2 476 864 A1 verwiesen.

Durch das Hochenergiestrahlverfahren wird eine Verschleißschutzzone hergestellt, die zu einer beachtlichen Standzeitverlängerung führt, wobei die Form der Zähne durch das Hochenergiestrahlverfahren im Wesentlichen nicht mehr verändert wird. Durch diese endkonturnahe Bearbeitung ist ein guter Erhalt der Zahnkanten möglich und eine Nachbearbeitung nicht erforderlich.

Vorteilhafterweise hat die Verschleißschutzzone einen Verschleißwiderstand, der um mindestens 10% größer und vorzugsweise um mindestens 25% größer als der Verschleißwiderstand des Materials des Grundkörpers ist. Der Verschleißwiderstand bzw. die abrasive Verschleißbeständigkeit lässt sich dabei z.B. über das Reibradverfahren nach der Norm ASTM G65 bestimmen.

Die Verschleißschutzzone kann durch Gefügeumwandlung des Materials des Grundkörpers in einem Härtungsverfahren oder Umschmelzverfahren mittels Hochenergiestrahl hergestellt sein. In diesen Verfahren wird das Material des Grundkörpers selbst im oberflächennahen Bereich durch den Hochenergiestrahl ohne Zusatzwerkstoff verändert und damit der Verschleißwiderstand gesteigert.

Alternativ kann die Verschleißschutzzone durch ein Beschichtungs-, Auftragsschweiß-, Dispergier-, Legierungs- oder Einschmelzverfahren mittels Hochenergiestrahl hergestellt sein. Durch diese Verfahren wird ein Zusatzwerkstoff auf bzw. in die Oberfläche des Grundkörpers auf- bzw. eingebracht.

Da bei Hochenergiestrahlverfahren der Energieeintrag in das Material des Grundkörper nur in sehr oberflächennahe Bereiche bis etwa 1 mm erfolgt und die gegebenenfalls aufgetragene Materialdicke sehr gering, nämlich 0,05 bis maximal 0,8 mm, bevorzugt 0,1 bis 0,4 mm, besonders bevorzugt 0,2 bis 0,3 mm ist, kommt es zu keiner wesentlichen Veränderung der Form der Zähne.

Vorzugsweise ist die Verschleißschutzzone eine durch ein Auftragsschweißverfahren aufgebrachte Hartstoffbeschichtung.

Dabei enthält die durch ein Auftragsschweißverfahren aufgebrachte Hartstoffbeschichtung in vorteilhafter Weise in ein Matrixmaterial eingebettete Hartstoffpartikel mit einer Größe zwischen 40 und 250 µm, wobei das Matrixmaterial vorzugsweise Nickel, Kobalt oder eine Nickel-Chrom-Silizium-Verbindung enthält und die Hartstoffpartikel vorzugsweise Karbide, Nitride oder Oxide, besonders bevorzugt Wolframkarbide sind.

### Bezugszeichenliste

- 1: Sägeblatt
- 2: Sägekante
- 3: Sägezahn
- 4: Verschleißschutzzone
- 5: Planflanke
- 6: Zahnbrust
- 7: Schneidfacette
- 8: Längsmittelebene
- 9: Zahnschneide
- 10: untere Seite des Sägeblatts
- 11: obere Seite des Sägeblatts
- 12: Zahndach
- 13: Zahngrund
- 14: Facettenflanke
- 15: Einzugstrommeln
- 16: Drehrichtung
- 17: Mährotor
- 18: Befestigungsausnehmungen
- 19: Trägerscheibe
- 20: Antriebswelle
- 21: Sägeblattrücken
- 22: Montageabschnitt
- 23: Zahnrücken
- 24: Sägelinie
- 25: Einzugsschacht

## Patentansprüche

1. Sägeblatt (1) für eine Säge zum Schneiden von stängeligem Halmgut, wie beispielsweise Mais oder Hirse, wobei das Sägeblatt (1) eine Sägekante (2) mit einer Aufeinanderfolge von Sägezähnen (3) aufweist, wobei die Sägezähne (3) eine Planflanke (5) und eine Facettenflanke (14) aufweisen, wobei die Sägezähne (3) mit einer Verschleißschutzzone (4), deren Verschleißwiderstand größer ist als der des Materials des Grundkörpers des Sägeblatts (1), versehen sind, wobei sich die Verschleißschutzzone (4) auf jeweils der Planflanke (5) jedes Sägezahns (3) befindet, wobei die Sägezähne (3) im Bereich der Zahnbrust (6), ausgehend von der Facettenflanke (14), eine Schneidfacette (7) aufweisen, wobei die Schneidfacette (7) mit einem Abstand zur Planflanke (5) des Sägezahns (3) zu einer stumpfen Zahnschneide (9) ausgebildet ist, und wobei bevorzugt die Schneidfacette (7) und die Facettenflanke (14) ohne Verschleißschutzzone (4) ausgebildet sind, **dadurch gekennzeichnet, dass** die Verschleißschutzzone (4) auf der Planflanke (5) des Sägezahns (3) vom Zahndach (12) bis zum oder nahe zum Zahngrund (13) reichend angeordnet ist und den Zahngrund (13) nicht überragt.

2. Sägeblatt (1) nach Anspruch 1, **dadurch gekennzeichnet, dass** die Verschleißschutzzone (4) mittels Hochenergiestrahlverfahren hergestellt ist.

3. Sägeblatt (1) nach einem der Ansprüche 1 oder 2, **dadurch gekennzeichnet, dass** die aufeinanderfolgenden Sägezähne (3) mit ihrer Planflanke (5) und der gegenüberliegenden Facettenflanke (14) abwechselnd auf der unteren (10) und der oberen (11) Seite des Sägeblatts (1) angeordnet sind.

4. Sägeblatt (1) nach einem der Ansprüche 1 bis 3, **dadurch gekennzeichnet, dass** die Zahndächer (12) der Sägezähne (3) tangential zur Sägelinie des Sägeblatts (1) liegen.

5. Sägeblatt (1) nach einem der Ansprüche 1 bis 3, **dadurch gekennzeichnet, dass** die Zahndächer (12) der Sägezähne (3) zur Sägelinie einen Freiwinkel größer 0 bis 50° aufweisen.

6. Sägeblatt (1) nach einem der Ansprüche 1 bis 3, **dadurch gekennzeichnet, dass** der Freiwinkel 0° und der Schnittwinkel 90° betragen.

7. Sägeblatt (1) nach Anspruch 6, **dadurch gekennzeichnet, dass** die Zahndächer (12) der aufeinanderfolgenden Sägezähne (3) der Sägekante (2) jeweils in schrägem Winkel zur Längsmittelebene (8) des Sägeblatts (1) angeordnet sind.

## Claims

1. A saw blade (1) for a saw for cutting stalky stem material such as maize or millet, the saw blade (1) having a saw edge (2) with a series of saw teeth (3), the saw teeth (3) having a plan flank (5) and a facet flank (14), wherein the saw teeth (3) are provided with a wear protection zone (4), which wear resistance is greater than the wear resistance of the material of the base body of the saw blade (1), wherein the wear protection zone (4) is located on each plan flank (5) of each saw tooth (3), the saw teeth (3) having a cutting bevel (7) in the area of the tooth face (6), starting from the facet flank (14), wherein the cutting bevel (7) is configured with a space between the plan flank (5) of the saw tooth (3) and a dull tooth cutting edge (9), and wherein the cutting bevel (7) and the facet flank (14) are preferably configured without wear protection zone (4), **characterised in that** the wear protection zone (4) is arranged on the plane flank (5) of the saw tooth (3) extending from the tooth top (12) to or near the tooth base (13) without extending beyond the tooth base (13).

2. The saw blade according to claim 1, **characterized in that** the wear protection zone (4) is manufactured by means of a high energy blasting method.

3. The saw blade (1) according to one of claims 1 or 2, **characterised in that** the series of saw teeth (3) with their plan flank (5) and the oppositely disposed facet flank (14) are arranged alternately on the lower (10) and the upper (11) side of the saw blade (1).

4. The saw blade (1) according to one of claims 1 to 3, **characterised in that** the tooth tops (12) of the saw teeth (3) are arranged tangentially to the saw line of the saw blade (1).

5. The saw blade (1) according to one of claims 1 to 3, **characterised in that** the tooth tops (12) of the saw teeth (3) present a clearance angle greater than 0° to 50° to the saw line.

6. The saw blade (1) according to one of claims 1 to 3, **characterised in that** the clearance angle is 0° and the cutting angle is 90°.

7. The saw blade (1) according to claim 6, **characterised in that** the tooth tops (12) of the series of saw teeth (3) of the saw edge (2) are each arranged at an oblique angle to the longitudinal centre plane (8) of the saw blade (1).

## Revendications

1. Une lame de scie (1) pour une scie destinée à couper des produits à tige, comme par exemple du maïs ou du millet, la lame de scie (1) présentant une arête de scie (2) avec une succession de dents de scie (3), les dents de scie (3) présentant un flanc plan (5) et un flanc à biseaux (14), les dents de scie (3) étant prévues avec une zone de protection contre l'usure (4), dont la résistance à l'usure est supérieure à celle du matériau du corps de base de la lame de scie (1), la zone de protection contre l'usure (4) se trouvant respectivement sur le flanc plan (5) de chaque dent de scie (3), les dents de scie (3) présentant un biseau de coupe (7) dans la zone de la face d'attaque (6) en partant du flanc à biseaux (14), le biseau de coupe (7) étant réalisée à une distance du flanc plan (5) de la dent de scie (3) pour former le tranchant de dent (9) émoussé, et de préférence le biseau de coupe (7) et le flanc à biseaux (14) étant réalisés sans zone de protection contre l'usure (4), **caractérisé en ce que** la zone de protection contre l'usure (4) est disposée sur le flanc plan (5) de la dent de scie (3) en s'étendant du toit de la dent (12) jusqu'au fond de la dent (13) ou à proximité de celui-ci et ne dépasse pas le fond de la dent (13).

2. La lame de scie (1) selon la revendication 1, **caractérisée en ce que** la zone de protection contre l'usure (4) est fabriquée par un procédé de grenaillage à haute énergie.

3. La lame de scie (1) selon l'une des revendications 1 ou 2, **caractérisée en ce que** les dents de scie (3) successives sont disposées avec leur flanc plan (5) et leur flanc à biseaux (14) opposé en alternance sur le côté inférieur (10) et le côté supérieur (11) de la lame de scie (1).

4. La lame de scie (1) selon l'une des revendications 1 à 3, **caractérisée en ce que** les toits de la dent (12) des dents de scie (3) sont tangents à la ligne de sciage de la lame de scie (1).

5. La lame de scie (1) selon l'une des revendications 1 à 3, **caractérisée en ce que** les toits des dents (12) des dents de scie (3) présentent un angle de dépouille supérieur à 0 à 50° par rapport à la ligne de sciage.

6. La lame de scie (1) selon l'une des revendications 1 à 3, **caractérisée en ce que** l'angle de dégagement est de 0° et l'angle de coupe est de 90°.

7. La lame de scie (1) selon la revendication 6, **caractérisée en ce que** les toits de dents (12) des dents de scie (3) successives de l' arête de scie (2) sont respectivement disposés selon un angle oblique par rapport au plan médian longitudinal (8) de la lame de scie (1).
